# FASCICULE DE BREVET EUROPEEN

(11) **EP 1 321 242 B1**
(45) Date de publication et mention de la délivrance du brevet: **28.02.2007**
(21) Numéro de dépôt: 02292942.6
(22) Date de dépôt: 28.11.2002
(51) Int. Cl.: B25C 1/08, F16L 29/02, F17C 13/04, F16K 1/30

(54) **Raccord de cartouche de gaz comprimé et d'appareil de fixation**
Verbindungselement zwischen Druckgaspatrone und Befestigungsgerät
Joint for connecting pressure gas cartridge to fastening apparatus

(30) Priorité: 18.12.2001 FR 0116370
(43) Date de publication de la demande: 25.06.2003
(73) Titulaire: SOCIETE DE PROSPECTION ET D'INVENTIONS TECHNIQUES SPIT, 26501 Bourg-Les-Valence Cédex (FR)
(72) Inventeur: Vallon, Emmanuel, 26800 Portes les Valence (FR); Herelier, Patrick, 07300 Tournon (FR)
(74) Mandataire: Bloch, Gérard

(56) Documents cités:
- EP-A1- 0 922 902
- EP-A2- 1 197 299
- GB-A- 1 033 689

## Description

L'invention concerne un ensemble d'un raccord, d'un embout d'éjection mâle d'une cartouche de gaz comprimé, destinée à alimenter en gaz comprimé un appareil de fixation à gaz comprimé, et d' un embout d'admission mâle d'un dispositif d'admission de gaz comprimé dans cet appareil de fixation à gaz comprimé, le raccord comportant des moyens d'étanchéité recevant les deux embouts mâles et assurant l'étanchéité du raccord entre les deux embouts.

Par appareil de fixation, il faut entendre un appareil d'entraînement d'éléments de fixation comme des clous.

FR-2 771 796 enseigne un tel ensemble. Plus précisément, avec cet ensemble, en fonctionnement, les extrémités des deux embouts mâles sont aboutées l'une contre l'autre dans un plan de joint, un manchon d'étanchéité s'étendant de part et d'autre de ce plan de joint et entourant les extrémités des deux embouts mâles, avec, dans le manchon, une gorge interne de rétention de gaz de fuite s'étendant entre les portions de surface cylindrique. Ces portions de surface d'étanchéité peuvent ne pas être suffisantes.

Par ailleurs, l'aboutement, par les extrémités de leurs embouts, de la cartouche et de l'électrovanne d'admission de l'appareil de fixation peut être à l'origine d'une certaine usure de l'électrovanne.

La présente invention vise à perfectionner l'ensemble de cet art antérieur, considéré comme art antérieur le plus proche.

Par le document GB-A-1033689, on connaît un raccord pour un tel ensemble d'un type similaire à celui présenté ci-dessus, mais il concerne un embout mâle de détendeur et un embout femelle, en l'espèce le goulot fileté d'une bouteille ou d'un tuyau de gaz, à visser dans le raccord.

La réalisation de l'étanchéité avec un tel raccord n'est pas simple.

Ainsi, la présente demande concerne l'ensemble de la revendication 1.

Grâce à l'invention, dans l'ensemble, l'étanchéité du raccord entre les deux embouts est assurée par un simple mouvement relatif de translation.

Dans une forme de réalisation intéressante de l'ensemble de l'invention, il est prévu un joint d'étanchéité annulaire et transversal destiné à être reçu dans deux gorges ménagées dans les surfaces d'extrémité des deux embouts mâles.

Mais de préférence, les moyens d'étanchéité comprennent un double manchon femelle de réception des deux embouts mâles avec une cloison d'étanchéité annulaire et transversale en partie médiane destinée à venir s'interposer entre les deux embouts.

L'invention sera mieux comprise à l'aide de la description suivante du raccord, en référence au dessin annexé, sur lequel
- la figure 1 est une vue en coupe éclatée d'une cartouche de gaz comprimé et d'une électrovanne d'admission de gaz d'un appareil de fixation à gaz comprimé;
- la figure 2 est une vue en coupe de la cartouche et de l'électrovanne de la figure 1, avec leurs embouts introduits dans le raccord d'étanchéité;
- la figure 3 est une vue analogue à celle de la figure 2, mais à l'état de transfert de gaz de la cartouche dans l'appareil et
- la figure 4 est une vue d'ensemble de l'électrovanne montée sur la cartouche.

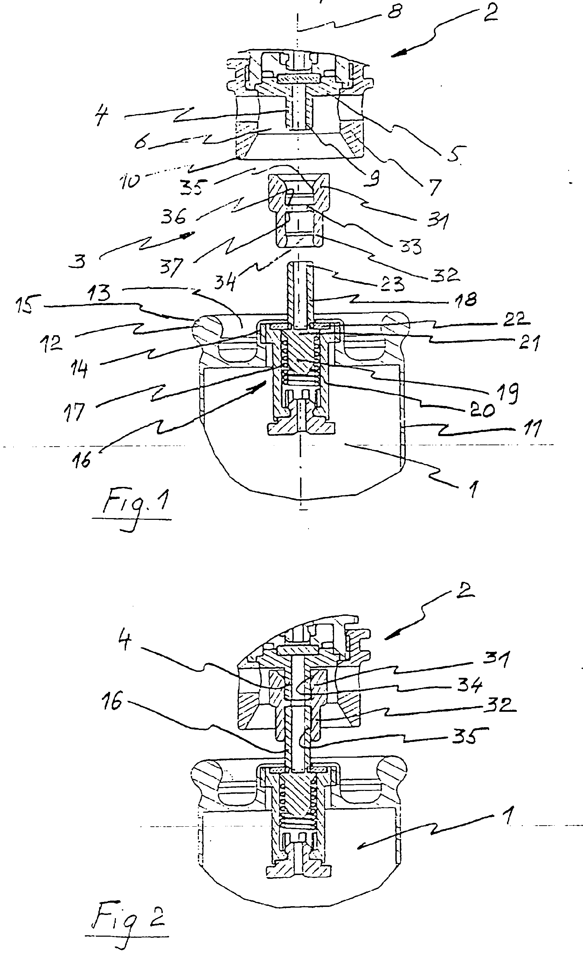

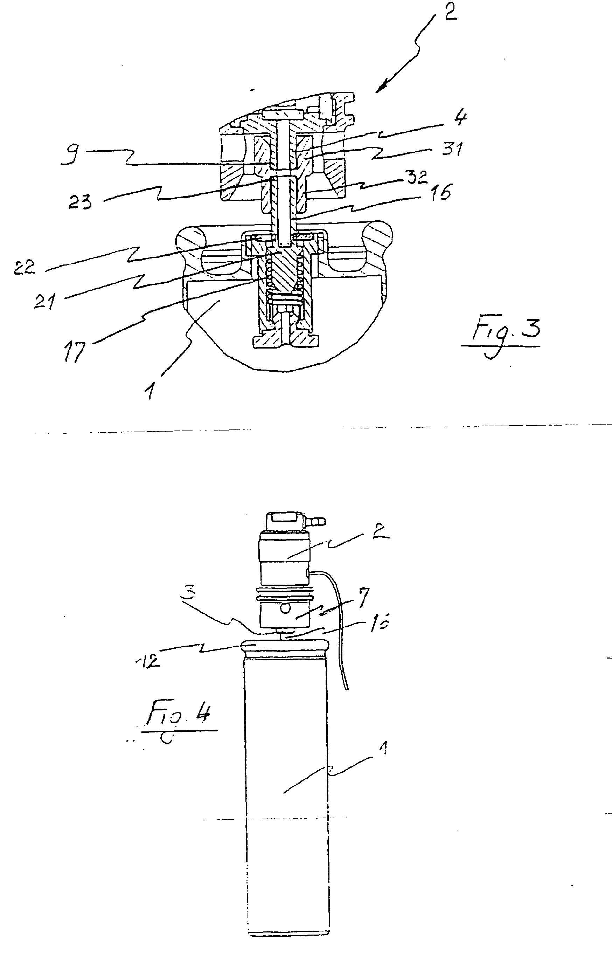

En référence à la figure 4, une cartouche de gaz comprimé 1 se monte sur l'électrovanne d'admission de gaz comprimé d'un appareil d'entraînement d'éléments de fixation, du genre clou, par l'intermédiaire d'un raccord d'étanchéité 3.

L'électrovanne d'admission 2 comporte un embout d'admission mâle 4 s'étendant axialement le long de l'axe 8 en saillie hors du fond 5 d'une cuvette 6, formée par une jupe annulaire 7 de réception du raccord 3. L'extrémité 9 de l'embout d'admission 4 de l'électrovanne est en retrait par rapport au bord annulaire 10 de la jupe 7. La cartouche de gaz comprimé 1 comporte une enveloppe cylindrique 11 se terminant par un bourrelet annulaire 12 formant cuvette 13 au centre de laquelle fait saillie un pied d'éjection 14, toutefois en retrait par rapport au bord annulaire 15 du bourrelet 12.

Un embout d'éjection 16 est monté dans le pied d'éjection 14, coulissant contre l'action d'un ressort de rappel 17. L'embout 16 comporte une partie tubulaire externe 18, en saillie hors du pied d'éjection 14, prolongée par une partie pleine interne 19 faisant office de clapet. Le clapet 19 est monté coulissant dans un cylindre 20. Le ressort de rappel 17 est logé à l'intérieur du cylindre 20, autour de la partie de clapet 19 de l'embout d'éjection 16, en appui contre un rebord annulaire 21 du clapet 19, de diamètre sensiblement égal à celui du cylindre 20 mais, toutefois très légèrement inférieur, pour l'échappement du gaz comprimé entre le cylindre 20 et ce rebord 21. Au repos, le rebord 21 du clapet 19 est en appui contre un joint annulaire 22 logé dans un épaulement annulaire du cylindre 20.

Le raccord 3, en coupe, présente une forme en H; le raccord 3 comporte ainsi deux manchons femelles 31, 32 ouverts en sens opposés, séparés par une cloison de fond annulaire et transversale 33 en partie médiane du raccord.

Le manchon 31 est destiné à recevoir l'embout d'admission 4 de l'électrovanne 2 de l'appareil, le manchon 32, l'embout d'éjection 16 de la cartouche de gaz comprimé 1.

Les deux parois intérieures 34, 35 des deux manchons 31, 32, respectivement, constituent des portions de surface d'étanchéité cylindrique qui, en fonctionnement (figures 2, 3), s'étendant de part et d'autre des extrémités 9 et 23 des deux embouts 4 et 16, respectivement.

Plus précisément, et toujours en fonctionnement, les extrémités 9 et 23 des embouts 4 et 16 viennent en butée contre les deux parois annulaires transversales 36, 37 de la cloison radiale 33 du raccord 3, opposées l'une à l'autre, qui s'étendent donc perpendiculairement à l'axe 8 des portions de surface d'étanchéité cylindrique 34, 35, et qui constituent ainsi des portions de surface d'étanchéité. En fonctionnement, la cloison 3 s'interpose entre les deux embouts 4, 16.

Toujours en fonctionnement, grâce à des moyens conventionnels non représentés, et les embouts mâles d'admission 4 et d'éjection 16 étant emmanchés dans le double manchon femelle 31, 32 de raccordement, l'embout d'éjection mâle 16 est repoussé par l'embout d'admission mâle 4 contre l'action du ressort de rappel 17 pour dégager le rebord de clapet annulaire 21 du joint 22 et laisser le gaz comprimé s'échapper de la cartouche 1 dans l'électrovanne 2 de l'appareil de fixation.

## Revendications

1. Ensemble d'un raccord, d'un embout d'éjection mâle (16) d'une cartouche de gaz comprimé (1) destinée à alimenter en gaz comprimé un appareil de fixation à gaz comprimé, et d'un embout d'admission mâle (4) d'un dispositif (2) d'admission de gaz comprimé dans cet appareil de fixation à gaz comprimé, le raccord comportant des moyens d'étanchéité (3) recevant les deux embouts mâles (16, 4) et assurant l'étanchéité du raccord entre les deux embouts, **caractérisé par le fait que** les moyens d'étanchéité (3) comprennent deux portions de surface d'étanchéité cylindrique (34, 35) s'étendant respectivement de part et d'autre des extrémités (23, 9) des deux embouts mâles (16, 4) ainsi que deux portions de surface d'étanchéité (36, 37), s'étendant perpendiculairement à l'axe (8) des portions de surface d'étanchéité cylindrique (34, 35), respectivement pour les deux surfaces d'extrémité des deux embouts mâles (16, 4), et recevant les deux embouts mâles (16, 4) par emmanchement.

2. Ensemble selon la revendication 1, dans lequel il est prévu un joint d'étanchéité annulaire et transversal reçu dans deux gorges ménagées dans les surfaces d'extrémité des deux embouts mâles (16, 4).

3. Ensemble selon l'une des revendications 1 et 2, dans lequel les moyens d'étanchéité comprennent un double manchon femelle (31, 32) de réception des deux embouts mâles (4, 16) avec une cloison d'étanchéité annulaire et transversale (33) en partie médiane s'interposant entre les deux embouts (4, 16).

## Claims

1. Assembly composed of a connector, of a male ejection end-piece (16) of a compressed-gas canister (1) intended to supply compressed gas to a fastening appliance that runs on compressed gas, and of a male inlet end-piece (4) of a device (2) for letting compressed gas into this fastening appliance that runs on compressed gas, the connector comprising sealing means (3) accommodating the two male end-pieces (16, 4) and sealing the connection between the two end-pieces, **characterized in that** the sealing means (3) comprise two cylindrical sealing surface portions (34, 35) extending respectively on each side of the ends (23, 9) of the two male end-pieces (16, 4) and two sealing surface portions (36, 37) extending at right angles to the axis (8) of the cylindrical sealing surface portions (34, 35), for the two end surfaces of the two male end-pieces (16, 4) respectively, and accommodating the two male end-pieces (16, 4) by push fitting.

2. Assembly according to Claim 1, in which there is an annular and transverse seal housed in two grooves formed in the end surfaces of the two male end-pieces (16, 4).

3. Assembly according to either of Claims 1 and 2, in which the sealing means comprise a double female sleeve (31, 32) for accommodating the two male end-pieces (4, 16), with an annular and transverse sealing partition (33) in the middle interposed between the two end-pieces (4, 16).

## Patentansprüche

1. Einheit eines Anschlusses, eines Steckauswurfansatzes (16) einer Druckgaspatrone (1), dazu bestimmt, ein Druckgasbefestigungsgerät mit Druckgas zu versorgen, und eines Steckeinlassansatzes (4) einer Vorrichtung (2) zum Einlassen von Druckgas in dieses Druckgasbefestigungsgerät, wobei der Anschluss Dichtmittel (3) aufweist, die die zwei Steckansätze (16, 4) aufnehmen und die Abdichtung des Anschlusses zwischen den zwei Ansätzen sicherstellen, **gekennzeichnet durch** die Tatsache, dass die Dichtmittel (3) zwei zylindrische Dichtflächenabschnitte (34, 35) aufweisen, die sich jeweils auf einer Seite der Enden (23, 9) der zwei Steckansätze (16, 4) erstrecken, sowie zwei Dichtflächenabschnitte (36, 37), die sich im rechten Winkel zu der Achse (8) der zylindrischen Dichtflächenabschnitte (34, 35) jeweils für die zwei Endflächen der zwei Steckansätze (16, 4) erstrecken und die zwei Steckansätze (16, 4) **durch** Aufschrumpfen aufnehmen.

2. Einheit nach Anspruch 1, bei der eine ringförmige Dichtung vorgesehen und quer in zwei Rillen aufgenommen ist, die in den Endflächen der zwei Steckansätze (16, 4) eingerichtet sind.

3. Einheit nach einem der Ansprüche 1 und 2, bei der die Dichtmittel eine doppelte Stutzenhülse (31, 32) zum Aufnehmen der zwei Steckansätze (4, 16) mit einer ringförmigen und quer verlaufenden Dichtwand (33) im mittleren Teil, die sich zwischen die zwei Ansätze (4, 16) fügt, aufweisen.
